# EUROPÄISCHE PATENTANMELDUNG

(11) **EP 1 571 512 A1**
(43) Veröffentlichungstag der Anmeldung: **07.09.2005**
(21) Anmeldenummer: 05101139.3
(22) Anmeldetag: 15.02.2005
(51) Int. Cl.: G05B 19/4065

(54) **Bedien- und Beobachtungssystem mit Klanggenerator zur Erzeugung von kontinuierlichen Klangmustern**

(30) Priorität: 05.03.2004 DE 102004010850
(71) Anmelder: SIEMENS AKTIENGESELLSCHAFT, 80333 München (DE)
(72) Erfinder: Dinges, Clemens, 90587, Obermichelbach (DE); Schlereth, Michael, 91452, Wilhermsdorf (DE)

(57) **Zusammenfassung**

Die Erfindung betrifft ein Bedien- und Beobachtungssystem für ein Automatisierungssystem, eine Produktions- oder eine Werkzeugmaschine. Zur Erkennung und sicheren Wahrnehmung insbesondere kritischer Betriebszustände weist das Bedien- und Beobachtungssystem einen Klanggenerator aus, der zur insbesondere kontinuierlichen Erzeugung von Klangmustern in Abhängigkeit von aktuellen Zustandswerten des Automatisierungssystems bzw. der Maschine wie z.B. momentaner Teiledurchsatz, Verschleißzustand eines Fräskopfs, Fertigungstoleranzen vorgesehen ist.

## Beschreibung

Die Erfindung betrifft ein Bedien- und Beobachtungssystem für ein Automatisierungssystem, eine Produktions- oder eine Werkzeugmaschine sowie ein Verfahren zum Betrieb eines Bedien- und Beobachtungssystem eines Automatisierungssystems, einer Produktions- oder einer Werkzeugmaschine.

Bedien- und Beobachtungssysteme, die auch als sogenannte HMI-Systeme (Human-Machine-Interface) bezeichnet werden, sind insbesondere im Bereich der Automatisierungstechnik weit verbreitet. Bei derartigen Bedien- und Beobachtungssystemen werden Betriebszustände, beispielsweise Temperaturen etc. häufig über Darstellungen auf Anzeigevorrichtungen wieder gegeben. Bei Fehlerzuständen kann beispielsweise ein fehlerhafter Betriebszustand durch die Darstellung im Bedien- und Beobachtungssystem auf der Anzeigevorrichtung durch spezielle Signalfarben, z.B. durch eine Darstellung in roter Farbe signalisiert werden oder durch Alermsignale z.B. über eine Hupe akustisch signalisiert werden.

Der Erfindung liegt die Aufgabe zugrunde, ein System bzw. ein Verfahren der eingangs genannten Art anzugeben, das eine intuitivere und sicherere Bedienung eines Automatisierungssystems, einer Produktions- oder einer Werkzeugmaschine ermöglicht.

Diese Aufgabe wird durch ein Bedien- und Beobachtungssystem für ein Automatisierungssystem, eine Produktions- oder eine Werkzeugmaschine gelöst mit mindestens einer Schnittstelle zur Zuführung von aktuellen Zustandswerten des Automatisierungssystems, der Produktions- oder der Werkzeugmaschine und mit einem Klanggenerator zur insbesondere kontinuierlichen Erzeugung von Klangmustern in Abhängigkeit von vorgebbaren Betriebszuständen, welche durch die über die Schnittstelle zugeführten Zustandswerte des Automatisierungssystems, der Produktions- oder der Werkzeugmaschine bestimmt sind.

Diese Aufgabe wird weiter durch ein Verfahren zur insbesondere kontinuierlichen Erzeugung von Klangmustern für ein Bedien- und Beobachtungssystem eines Automatisierungssystems, einer Produktions- oder einer Werkzeugmaschine gelöst, bei dem über mindestens eine Schnittstelle des Automatisierungssystems, der Produktions- oder der Werkzeugmaschine aktuelle Zustandswerte des Automatisierungssystems, der Produktions- oder der Werkzeugmaschine dem Bedien- und Beobachtungssystem zugeführt werden, bei dem die Klangmuster mittels eines Klanggenerators in Abhängigkeit von vorgebbaren Betriebszuständen, welche durch die über die Schnittstelle zugeführten Zustandswerte des Automatisierungssystems, der Produktions- oder der Werkzeugmaschine bestimmt sind, erzeugt werden.

Der Erfindung liegt die Erkenntnis zugrunde, auch die bisher weitgehend ungenutzte, unbewusste Sinneswahrnehmung des Hörens bei Bedien- und Beobachtungssystemen produktiv zu nutzen. Hierzu werden aktuelle Zustandswerte des Automatisierungssystems, der Produktions- oder der Werkzeugmaschine über eine Schnittstelle dem Bedien- und Beobachtungssystem zugeführt. Dabei werden dem Bediener einer Anlage oder einer Maschine die aktuellen Betriebsdaten nicht lediglich optisch auf einer Anzeigevorrichtung visualisiert, sondern es werden insbesondere kontinuierlich auch aus dem Bedien- und Beobachtungssystem Klangmuster erzeugt. Ein erstes Klangmuster dienst beispielsweise der Kennzeichnung eines Betriebszustandes, in dem sämtliche Betriebsdaten unkritisch und somit in Ordnung sind. Für weitere Betriebszustände sind weitere Klangmuster vorgesehen. So kann in Abhängigkeit von vorgebbaren Betriebszuständen, beispielsweise beim Überschreiten von bestimmten Sensorwerten mittels des Klanggenerators ein neues Klangmuster erzeugt werden, das den Bediener auf einen neuen Betriebszustand hinweist und so eine direkte akustische Rückkopplung des Automatisierungssystems, der Produktions- oder der Werkzeugmaschine an den Benutzer und Bediener liefert. Die Klangmuster, die auch als Klang- oder Geräuschteppiche ausgebildet sein können, entsteht somit eine kontinuierliche zusätzliche Bedienerinformation, die in Kombination mit ggf. vorhandenen Visualisierungen und/oder tatsächlichen Anlagengeräuschen eine Art erweiterte Realität im Sinne einer akustisch angereicherten Augmented Reality darstellt. Hierdurch wird auch bei größeren Anlagen und bei einer somit erforderlichen sogenannten "Remote-Bedienung" beispielsweise im Leitstand einer größeren Anlage eine ansonsten schon aufgrund der räumlichen Anordnung der einzelnen Anlagenkomponenten bisher nicht mögliche direkte akustische Rückkopplung erzielt. Es kommt somit zu einer Erweiterung der Kommunikationsmöglichkeiten zwischen Mensch und Maschine durch die Kombination von einem HMI-System mit klangbasierten Kommunikationsformen.

Die bisher ungenutzte, unbewusste Sinneswahrnehmung des Hörens kann für die Automatisierungstechnik erschlossen und somit auch produktiv in der Fertigung genutzt werden.

Eine unverwechselbare Gestaltung der Klangmuster, die im folgenden auch als Klangsignale bezeichnet werden, kann in der Weise sichergestellt werden, dass der Klanggenerator zur Erzeugung von aus der Welt der Geräusche oder aus der Welt der Töne kommenden Klangsignalen vorgesehen ist. Als Signale aus der Welt der Geräusche kommen beispielsweise ein verschieden frequentes Brummen oder aus der Welt der Töne verschiedene Melodien und Rhythmen in Betracht. Dabei kann ein derartiges klanggestütztes HMI (Human Machine Interface) auch Element des Corporate Design eines HMI-Anbieters sein oder des Anlagen- bzw. Maschinenherstellers. Diese Eigenschaften können durch ein Klang-Engineering somit unverwechselbar gestaltet werden, so dass sich entweder herstellerspezifische Charakteristika klar designen lassen oder im Falle einer Normung bestimmter Klangsignale ein herstellerunabhängige Klangwelt ergibt.

Als mögliche Ausgabemedien zur Ausgabe der Klangsignale des Bedien- und Beobachtungssystems können mindestens ein Lautsprecher, mindestens ein Kopfhörer und/oder mindestens eine Anzeigevorrichtung einer Bedienvorrichtung vorgesehen sein.

Eine besonders vorteilhafte Ausgestaltung eines Ausgabemedium besteht darin, dass als Kopfhörer ein mobiles Headset vorgesehen ist. Der Vorteil hierbei besteht unter anderem darin, dass in diesem Fall der Geräuschpegel z.B. in einer Anlage nicht beeinflusst wird.

Die Erzeugung eines Klangdesigns beispielsweise einer Halle, in der z.B. eine Vielzahl von Einzelmaschinen angeordnet ist, kann dadurch erfolgen, dass die Lautsprecher zur von einzelnen Bedieneinrichtungen unabhängigen Platzierung insbesondere in einer Halle zur Erzeugung eines Klangdesigns der Halle vorgesehen sind. Hierdurch wird erreicht, dass die so entstehende "Klangoberfläche" kann ähnlich wie die HMI Bedienung eine eigenständige Applikation darstellt. Diese HMI-Applikation greift dabei auf Daten eines Bedien- und Beobachtungssystems oder direkt auf Daten der den einzelnen Geräten und Maschinen zugeordneten speicherprogrammierbaren Steuerungen (SPS) zu, um, um die jeweiligen Klangsignale zu erzeugen.

Eine Geräuschreduzierung kann auf einfache Weise dadurch sichergestellt werden, dass das Bedien- und Beobachtungssystem Sensoren, insbesondere Mikrofone aufweist, deren Signale zur Unterdrückung von Umgebungsschall vorgesehen sind.

Sie spezifische Ansprache von bestimmten Bedienern kann in der Weise sichergestellt werden, dass das Bedien- und Beobachtungssystem Zuordnungsmittel zur individuellen Zuordnung von Klangsignalen zu Lautsprechern und/oder Kopfhörern aufweist.

Eine besonders wirkungsvolle Art des Bedienen- und Beobachten einer Anlage oder einer Maschine im Zusammenspiel mit Klangsignalen kann in der Weise erfolgen, dass das Bedien- und Beobachtungssystem Spracheingabemittel insbesondere in Form eines Headsets zur Eingabe von Steuerbefehlen an das Automatisierungssystem, an die Produktions- oder die Werkzeugmaschine aufweist. So kann beispielsweise mit Hilfe eines Headsets, welches bei Vorliegen von bestimmten Betriebszuständen Klangsignale an einen zugeordneten Benutzer ausgibt, der Benutzer mittels des Mikrofons des Headsets auch gleich Steuerbefehle in Form von gesprochenen Steuerworten an das System abgeben und so die Anlage oder Maschine durch Steuerbefehle sowohl bedienen als auch durch Klangsignale und ggf. das Auslesen von Prozesswerten etc. beobachten.

Mögliche vorteilhafte Kriterien, die zur Auslösung von Klangsignalen herangezogen werden, können in der Weise realisiert werden, dass zur Zuführung an die Schnittstelle als Zustandswerte ein momentaner Teiledurchsatz, ein Verschleißzustand eines Werkzeugs und/oder Abweichungen von Fertigungstoleranzen vorgesehen sind.

Im Folgenden wird die Erfindung anhand der in den Figuren dargestellten Ausführungsbeispiele näher beschrieben und erläutert.

Es zeigen:
- FIG 1: eine schematische Darstellung eines Bedien- und Beobachtungssystem für eine Maschine,
- FIG 2: eine schematische Darstellung eines aus mehreren Einzelmaschinen bestehende Anlage mit einem klangbasierten Bedien- und Beobachtungssystem,
- FIG 3: eine schematische Darstellung eines Bedien- und Beobachtungssystem für ein Automatisierungssystem mit verteilt angeordneten Maschinen und
- FIG 4: eine schematische Darstellung eines Automatisierungssystems mit Fernzugriff auf eine Steuerung eines Automatisierungsgerätes über eine bidirektionale Datenverbindung mit einem Bedien- und Beobachtungssystem mit Klanggenerator und Sprachsteuerung.

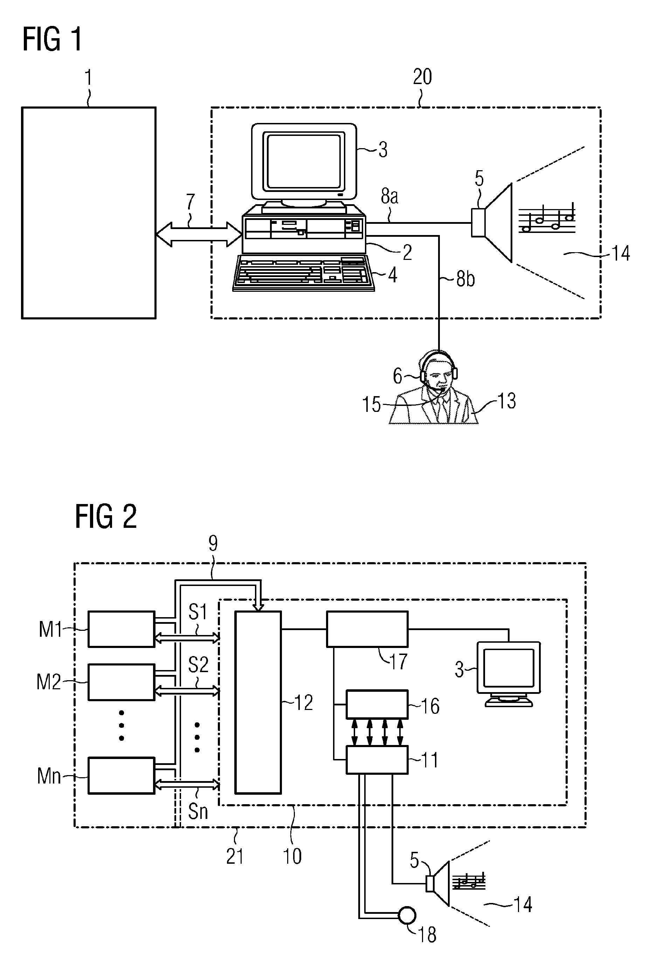

FIG 1 zeigt eine schematische Darstellung eines Bedien- und Beobachtungssystems 20 für eine Maschine 1. Das Bedien- und Beobachtungssystem 20 besteht im wesentlichen aus einem Rechner 2 mit einer damit verbundenen Anzeigevorrichtung 3 und einer Tastatur 4. Zwischen dem Rechner 2 und der Maschine 1 ist eine Datenverbindung 7 vorgesehen, über die die zum Bedienen und Beobachten der Maschine 1 erforderlichen Kommunikationssignale übertragen werden. Das Bedien- und Beobachtungssystem 20 dient der Interaktion mit einem Bediener 13. Der Bediener 13 trägt bei dem in FIG 1 dargestellten Ausführungsbeispiel einen Kopfhörer 6 mit Sprecheinheit 15, der über eine Verbindung 8b mit dem Rechner 2 in Verbindung steht. An den Rechner 2 ist darüber hinaus ein Lautsprecher 5 über eine Verbindungsleitung 8a angeschlossen sowie über eine insbesondere drahtlose Verbindung 8b ein Kopfhörer anschließbar. Das Bedien- und Beobachtungssystem 20 umfasst weiter einen in FIG 1 nicht weiter dargestellten Klangenerator zur Erzeugung von an den Lautsprecher 5 bzw. an den Kopfhörer 6 ausgebbaren Klangsignalen 14.

Das in FIG 1 gezeigte Bedien- und Beobachtungssystem 20 dient dem Bedienen und Beobachten der Maschine 1 durch den Bediener 13. Als Interaktionsmöglichkeit zwischen Bediener 15 und Maschine 1 dient im wesentlichen der Rechner 2 mit Anzeigevorrichtung 3 und Tastatur 4. Der Bediener kann dabei auf der Anzeigevorrichtung 3 bestimmte Einstellungen der Maschine vornehmen und die Maschine im Betrieb auch überwachen und beobachten. Hierzu werden über die Datenverbindung 7 sowohl die Steuersignale vom Rechner 2 an die Maschine 1 als auch bestimmte Zustandsdaten von der Maschine 1 an den Rechner 2 und die Anzeigevorrichtung 3 übertragen. Die Besonderheit des in FIG 1 dargestellten Ausführungsbeispiels besteht nun darin, dass das Bedien- und Beobachtungssystem 20 einen Klanggenerator zur Erzeugung von Klangsignalen 14 aufweist. Die Ausgabe dieser Klangsignale 14 kann sowohl über den Kopfhörer 6 des Bedieners 15 als auch über den Lautsprecher 5 erfolgen. Ist der Kopfhörer 6 als sogenanntes Headset mit einem Mikrofon 15 ausgebildet, so kann der Bediener 13 unmittelbar durch Sprachkommandos z.B. beim Vorliegen von unerwünschten Betriebszuständen entsprechende Steuersignale an die Maschine abgeben. Durch die zusätzliche akustische Ausgabe der Klangsignale 14 erhält der Bediener 13 auf intuitive Art und Weise somit zusätzliche Hinweise, die auch bei mangelhafter Aufmerksamkeit des Bedieners 13 zu einer sicheren Wahrnehmung führen. Hierdurch wird auf überraschend einfache Weise eine neue Ebene des Bedienens und Beobachtens für Automatisierungssysteme, Produktions- oder Werkzeugmaschinen erschlossen.

FIG 2 zeigt eine schematische Darstellung einer aus mehreren Einzelmaschinen M1...Mn bestehende Anlage 21 mit einem klangbasierten Bedien- und Beobachtungssystem 10. Die Anlage 21 bzw. das Automatisierungssystem 21 besteht aus Maschinen M1...Mn, die jeweils über einen Datenbus 9 bzw. über Schnittstellen S1...Sn mit einer Auswerteeinrichtung 12 verbunden sind. Die Auswerteeinrichtung 12 ist Teil des dem Automatisierungssystem 21 zugeordneten Bedien- und Beobachtungssystems 10, welches weiter eine Steuereinrichtung 17, einen Speicher 16, eine Anzeigevorrichtung 3 sowie einen Klanggenerator 11 zur Ausgabe von Klangsignalen 14 über einen Lautsprecher 5 aufweist.

Die Besonderheit des in FIG 2 dargestellten Automatisierungssystems besteht im wesentlichen darin, dass das Bedien- und Beobachtungssystem 10 in der Lage ist, mittels des Klanggenerators 11 Klangsignale 14 in Abhängigkeit von vorgebbaren Betriebszuständen zu erzeugen. Die jeweils vorgebbaren Betriebszustände können über das Bedien- und Beobachtungssystem 10 projektiert werden. Nach Definition der so vorgegebenen Betriebszustände können mit Hilfe der Auswerteeinrichtung 12 die entsprechend vorgegebenen Betriebszustände detektiert werden und hierdurch der Klanggenerator 11 entsprechend angesteuert werden. Über die Schnittstellen S1...S9 bzw. über das Bussystem 9 können als Zustandswerte beispielsweise ein momentaner Teiledurchsatz der Maschinen M1...Mn, ein Verschleißzustand eines Werkzeugs der Maschinen M1...Mn und/oder Abweichungen von Fertigungstoleranzen, die jeweils über entsprechende Sensoren ermittelt werden, zugeführt werden. Im Bedien- und Beobachtungssystem 10 können in einem Speicher 16 verschiedene Klangmuster gespeichert sein, die jeweils vorher eindeutig gekennzeichneten Betriebszuständen zugeordnet worden sind. Das Bedien- und Beobachtungssystem 10 dient dabei somit bei dem in FIG 2 dargestellten Ausführungsbeispiel nicht lediglich der Projektierung und des Engineerings der bisherigen normalen Betriebsfunktionalität des Automatisierungssystems 21, sondern es umfasst weiterhin auch ein sogenanntes Klang-Engineering. Zusätzlich zu den unterschiedlichen Klangmustern, die im Speicher 16 gespeichert sind, können in einem weiteren Speicherbereich bzw. in einem weiteren Speicher in jeweils vorgebbaren Betriebszuständen auch individuelle Zuordnungen der Klangsignale 14 zu bestimmten Bedienern erfolgen. Dies ist insbesondere bei der Ausgabe der Klangsignale 14 über Kopfhörer bzw. über Headsets von Bedeutung. In diesem Fall können nämlich niederpriore Betriebszustände, die zwar eine akustische Information des Bedienpersonals erforderlich machen, jedoch keinen direkten entscheidenden Eingriff erfordern, an andere Mitarbeiter übermittelt werden, während sehr kritische Betriebszustände beispielsweise an speziell geschulte Mitarbeiter übermittelbar sind. Hierzu ist bei dem in FUF 2 dargestellten Ausführungsbeispiel eine benutzerspezifische bzw. klangspezifische Benutzerschnittstelle 18 vorgesehen. Diese dient einem mit Hilfe des Klang-HMI 10 projektierten Klangverhaltens des Automatisierungssystems. Hierdurch wird somit auch die Betriebssicherheit einer Anlage 21 bzw. eines Automatisierungssystems erhöht.

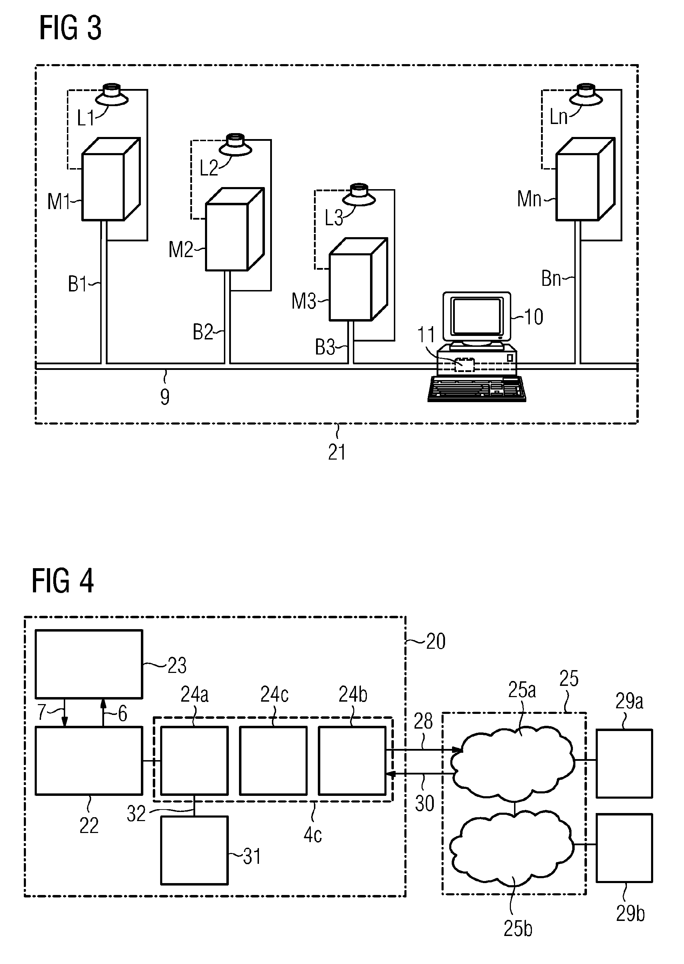

FIG 3 zeigt eine schematische Darstellung eines Automatisierungssystems mit verteilt angeordneten Maschinen M1...Mn. Den Maschinen M1...Mn sind jeweils Lautsprecher L1...Ln zugeordnet, wobei sowohl die Maschinen M1...Mn, als auch die Lautsprecher L1...Ln jeweils mit einem Bussystems 9 verbunden sind, welches ebenfalls mit einem Bedien- und Beobachtungssystems 10 gekoppelt ist. Das Bedien- und Beobachtungssystem 10 umfasst dabei wiederum einen Klanggenerator 11, welcher in der Lage ist, über das Bussystem 9 die einzelnen Lautsprecher L1...Ln der Maschinen M1...Mn anzusprechen. Die Lautsprecher können dabei unabhängig von einzelnen HMI-Panels in der Halle so platziert werden, um ein bestimmtes Klangdesign der Halle zu erzeugen. Die so entstehende Klangoberfläche stellt dann ähnlich wie die visuelle HMI-Bedienung eine eigenständige Applikation dar, die jedoch auf Daten des bzw. der HMI-Panels des Bedien- und Beobachtungssystems 10 oder der damit verbundenen speicherprogrammierbaren Steuerungen zugreift, um die entsprechenden Klänge zu erzeugen. Über eigene Sensoren der Klangoberfläche, wie beispielsweise Mikrofone kann dabei zusätzlich der Umgebungsschall unterdrückt werden, so dass sich durch die Lautsprecher L1...Ln keine Störgeräusche, sondern vielmehr eine Reduzierung des Umgebungsschalls ergibt.

FIG 4 zeigt ein Ausführungsbeispiel eines Automatisierungssystems 20 mit Fernzugriff auf eine Steuerung 22 eines Automatisierungsgerätes 23 über eine bidirektionale Datenverbindung 28, 30, insbesondere eine bidirektionale Telefonverbindung. Hierzu ist die Telefonverbindung 28, 30 einerseits mit dem Automatisierungssystem 20, andererseits mit einem Kommunikationsnetz 25 verbindbar. Das Kommunikationsnetz 25 besteht aus einem Festnetz 25a und einem mit einem Telefonnetz 25 verbundenen Mobilfunknetz 25b. Mit dem Festnetz 25a ist ein als Festnetzapparat 29a ausgebildetes Endgerät, mit dem Mobilfunknetz 25b ein als Mobiltelefon 29b ausgebildetes zweites Endgerät verbindbar. Zwischen Steuerung 22 und Telefonverbindung 28, 30 ist eine Kopplungsvorrichtung 24 vorgesehen, die einen Call-Prozessor 24a und eine Telefonanschaltung 24b enthält. Die Kopplungsvorrichtung umfasst bei dem in FIG 4 gezeigten Ausführungsbeispiel einen Klanggenerator 11 zur Erzeugung von Klangsignalen. Über eine Verbindungsleitung 32 ist die Kopplungsvorrichtung 24 mit einer Leitstelle 31 des Automatisierungssystems 20 verbindbar. Die Steuerung 22 ist in der Lage, Steuersignale 26 an das Automatisierungsgerät 23 zu senden und Antwortsignale 27 von dem Automatisierungsgerät zu erhalten.

Die Besonderheit des in FIG 4 dargestellten Automatisierungssystems 20 besteht im Wesentlichen in der Zwischenschaltung der Kopplungsvorrichtung 24 mit Klangenerator zwischen Steuerung 22 und Kommunikationsnetz 25. Die Kopplungsvorrichtung 4 ermöglicht es einem beliebigen Benutzer mit einer entsprechenden Autorisierung jederzeit und von jedem Ort auf die Steuerung 22 zuzugreifen, um beispielsweise einen Störfall zu beheben. Die Steuerung 22 des Automatisierungssystems ist über den Call-Prozessor 24a und die Telefonanschaltung 24b mit dem einem firmeninternen und/oder mit einem öffentlichen Telefonnetz 25 verbunden. Die Telefonanschaltung 24b kann z.B. über eine Telefonanschaltung wie in Call-Centern oder über ein Voice-Modem erfolgen. Die Telefonanschaltung 24b arbeitet bidirektional, d.h. die Steuerung 22 kann sowohl selbst einen "Menschen" anrufen, als auch Anrufe von "Menschen" entgegennehmen. Auch der Call-Prozessor 24a arbeitet bidirektional, d.h. er kann Sprache und Klangsignale ausgeben, z.B. um Systemzustände oder Störungsmeldungen an einen Nutzer der Endgeräte 29a, 29b auszugeben und auch um Sprache zu analysieren, z.B. um Befehle entgegenzunehmen oder Fragen nach Auswertung mittels einer Sprachverarbeitung zu beantworten. Als Endgeräte eignen sich dabei insbesondere Schnurlostelefone und/oder Mobiltelefone mit drahtlosen Headsets, beispielsweise Bluetooth-Headsets. Eine sprecherunabhängige und damit ohne Lernphase mögliche Sprachverarbeitung kann dadurch sichergestellt werden, dass in der Regel lediglich ein eingeschränkter Wortschatz bei der "Unterhaltung" mit dem Automatisierungssystem 20 verwendet wird. Eine vorteilhafte Anwendung der Sprachanalyse besteht auch darin, dass diese zur Benutzerauthentifizierung verwendet werden kann. Hierdurch entfällt eine Authentifizierung über Passwortmechanismen mit den bekannten Nachteilen, nämlich den Problem der jeweiligen Verfügbarkeit beim Nutzer eines Passwortes. Neben einer Sprachauswertung ist die Kopplungsvorrichtung auch in der Lage, die von einen Benutzer der Endgeräte 29a, 29b an die Kopplungsvorrichtung 24 übertragene Wähltonsignale auszuwerten und hierdurch entsprechende Anweisungen an die Steuerung 22 des Automatisierungsgeräts zu erzeugen.

Zusammenfassend betrifft die Erfindung somit ein Bedien- und Beobachtungssystem für ein Automatisierungssystem, eine Produktions- oder eine Werkzeugmaschine. Zur Erkennung und sicheren Wahrnehmung insbesondere kritischer Betriebszustände weist das Bedien- und Beobachtungssystem einen Klanggenerator aus, der zur Erzeugung von Klangsignalen in Abhängigkeit von aktuellen Zustandswerten des Automatisierungssystems bzw. der Maschine wie z.B. momentaner Teiledurchsatz, Verschleißzustand eines Fräskopfs, Fertigungstoleranzen vorgesehen ist.

## Patentansprüche

1. Bedien- und Beobachtungssystem (10) für ein Automatisierungssystem (13), eine Produktions- oder eine Werkzeugmaschine (M1..Mn)
• mit mindestens einer Schnittstelle (S1..Sn, 9) zur Zuführung von aktuellen Zustandswerten des Automatisierungssystems (13), der Produktions- oder der Werkzeugmaschine (M1..Mn) und
• mit einem Klanggenerator (11) zur insbesondere kontinuierlichen Erzeugung von virtuellen Klangmustern (14) in Abhängigkeit von vorgebbaren Betriebszuständen, welche durch die über die Schnittstelle (S1..Sn, 9) zugeführten Zustandswerte des Automatisierungssystems (13), der Produktions- oder der Werkzeugmaschine (M1..Mn) bestimmt sind.

2. System nach Anspruch 1,
**dadurch gekennzeichnet,**
**dass** der Klanggenerator (11) zur Erzeugung von aus der Welt der Geräusche oder aus der Welt der Töne kommenden Klangmustern (14) vorgesehen ist.

3. System nach einem der Ansprüche 1 oder 2,
**dadurch gekennzeichnet,**
**dass** zur Ausgabe der Klangmuster (14) des Bedien- und Beobachtungssystems (10) mindestens ein Lautsprecher (L1..Ln), mindestens ein Kopfhörer (6) und/oder mindestens eine Anzeigevorrichtung einer Bedienvorrichtung vorgesehen sind.

4. System nach Anspruch 3,
**dadurch gekennzeichnet,**
**dass** als Kopfhörer (6) ein mobiles Headset vorgesehen ist.

5. System nach einem der Ansprüche 1 bis 4,
**dadurch gekennzeichnet,**
**dass** die Lautsprecher (L1..Ln) zur von einzelnen Bedieneinrichtungen unabhängigen Platzierung insbesondere in einer Halle zur Erzeugung eines Klangdesigns der Halle vorgesehen sind.

6. System nach einem der Ansprüche 1 bis 5,
**dadurch gekennzeichnet,**
**dass** das Bedien- und Beobachtungssystem (10) Sensoren, insbesondere Mikrofone aufweist, deren Signale zur Unterdrückung von Umgebungsschall vorgesehen sind.

7. System nach einem der Ansprüche 1 bis 6,
**dadurch gekennzeichnet,**
**dass** das Bedien- und Beobachtungssystem (10) Zuordnungsmittel (12, 17) zur individuellen Zuordnung von Klangmustern (14) zu Lautsprechern (L1..Ln) und/oder Kopfhörern (6) aufweist.

8. System nach einem der Ansprüche 1 bis 7,
**dadurch gekennzeichnet,**
**dass** das Bedien- und Beobachtungssystem (10) Spracheingabemittel (15) insbesondere in Form eines Headsets zur Eingabe von Steuerbefehlen an das Automatisierungssystem (13), an die Produktions- oder die Werkzeugmaschine (M1..Mn) aufweist.

9. System nach einem der Ansprüche 1 bis 8,
**dadurch gekennzeichnet,**
**dass** zur Zuführung an die Schnittstelle (S1..Sn, 9) als Zustandswerte ein momentaner Teiledurchsatz, ein Verschleißzustand eines Werkzeugs und/oder Abweichungen von Fertigungstoleranzen vorgesehen sind.

10. Verfahren zur insbesondere kontinuierlichen Erzeugung von virtuellen Klangmustern (14) für ein Bedien- und Beobachtungssystem (10) eines Automatisierungssystems (20), einer Produktions- oder einer Werkzeugmaschine (M1..Mn),
• bei dem über mindestens eine Schnittstelle (S1..Sn, 9) des Automatisierungssystems (20), der Produktions- oder der Werkzeugmaschine (M1..Mn) aktuelle Zustandswerte des Automatisierungssystems (13), der Produktions- oder der Werkzeugmaschine (M1..Mn) dem Bedien- und Beobachtungssystem (10) zugeführt werden,
• bei dem die Klangmuster (14) mittels eines Klanggenerators (11) in Abhängigkeit von vorgebbaren Betriebszuständen, welche durch die über die Schnittstelle (S1..Sn, 9) zugeführten Zustandswerte des Automatisierungssystems (13), der Produktions- oder der Werkzeugmaschine (M1..Mn) bestimmt sind, erzeugt werden.

11. Verfahren nach Anspruch 10,
**dadurch gekennzeichnet,**
**dass** mittels des Klanggenerators (11) aus der Welt der Geräusche oder aus der Welt der Töne kommende Klangmuster (14) erzeugt werden.

12. Verfahren nach einem der Ansprüche 10 oder 11,
**dadurch gekennzeichnet,**
**dass** die Klangmuster (14) des Bedien- und Beobachtungssystems (10) über mindestens einen Lautsprecher (L1..Ln), über mindestens einen Kopfhörer (6) und/oder über mindestens eine Anzeigevorrichtung (3) ausgegeben werden.

13. Verfahren nach Anspruch 12,
**dadurch gekennzeichnet,**
**dass** die Klangmuster (14) des Bedien- und Beobachtungssystems (10) über einen als mobiles Headset ausgebildeten Kopfhörer (6) ausgegeben werden.

14. Verfahren nach einem der Ansprüche 10 bis 13,
**dadurch gekennzeichnet,**
**dass** die Klangmuster (14) durch von einzelnen Bedieneinrichtungen unabhängige Lautsprecher (L1..Ln) insbesondere in einer Halle als Klangdesign erzeugt werden.

15. Verfahren nach einem der Ansprüche 10 bis 14,
**dadurch gekennzeichnet,**
**dass** bei der Erzeugung der Klangmuster (14) Umgebungsschall über Sensoren, insbesondere Mikrofone unterdrückt wird.

16. Verfahren nach einem der Ansprüche 10 bis 15,
**dadurch gekennzeichnet,**
**dass** durch das Bedien- und Beobachtungssystem (10) Klangmuster (14) zu Lautsprechern (L1..Ln) und/oder Kopfhörern (6) individuell zuordenbar sind.

17. Verfahren nach einem der Ansprüche 10 bis 16,
**dadurch gekennzeichnet,**
**dass** Steuerbefehle an das Automatisierungssystem (13), an die Produktions- oder die Werkzeugmaschine (M1..Mn) über Spracheingabemittel (15) des Bedien- und Beobachtungssystems (10) insbesondere in Form eines Headsets eingebbar sind.

18. Verfahren nach einem der Ansprüche 10 bis 17,
**dadurch gekennzeichnet,**
**dass** zur Zuführung an die Schnittstelle (S1..Sn, 9) als Zustandswerte ein momentaner Teiledurchsatz, ein Verschleißzustand eines Werkzeugs und/oder Abweichungen von Fertigungstoleranzen vorgesehen sind.
